# EUROPÄISCHE PATENTSCHRIFT

(11) **EP 2 348 334 B1**
(45) Veröffentlichungstag und Bekanntmachung des Hinweises auf die Patenterteilung: **03.10.2012**
(21) Anmeldenummer: 10016005.0
(22) Anmeldetag: 23.12.2010
(51) Int. Cl.: G01S 19/08

(54) **Verbesserung der Integritätskommunikation in einem Satellitennavigationssystem**
Improvement of the integrity communication in a satellite navigation system
Amélioration de la communication d'intégrité dans un système de navigation par satellite

(30) Priorität: 13.01.2010 DE 102010004617
(43) Veröffentlichungstag der Anmeldung: 27.07.2011
(73) Patentinhaber: Astrium GmbH, 82024 Taufkirchen (DE)
(72) Erfinder: Trautenberg, Hans L., Dr., 85521 Ottobrunn (DE)
(74) Vertreter: Avenhaus, Beate

(56) Entgegenhaltungen:
- EP-A1- 2 051 093
- EP-A1- 2 056 118
- C. CATALÁN, C. HERNÁNDEZ, A. MOZO, L. FERNÁNDEZ, F. AMARILLO: "Improved Integrity Concept for Future GNSS Evolutions", ION GNSS 21ST. INTERNATIONAL TECHNICAL MEETING OF THE SATELLITE DIVISION, 19. September 2008 (2008-09-19), Seiten 2547-2557, XP002629402, Savannah, GA
- L. FERNÁNDEZ, C. CATALÁN, A. MOZO, F. AMARILLO: "Improved Signal In Space Accuracy based on Matrix Indicators", 22ND INTERNATIONAL MEETING OF THE SATELLITE DIVISION OFTHE INSTITUTE OF NAVIGATION, 25. September 2009 (2009-09-25), Seiten 2839-2851, XP002629403, Savannah, GA

## Beschreibung

Die Erfindung betrifft ein Verfahren zur Verbesserung der Integritätskommunikation in einem Satellitennavigationssystem gemäß Anspruch 1 und eine Vorrichtung zur Verbesserung der Integritätskommunikation in einem Satellitennavigationssystem gemäß Anspruch 6.

In der Patentanmeldung DE 10 2007 050 716 ist beschrieben, wie die Integritätskommunikation in einem Satellitennavigationssystem dadurch verbessert werden kann, dass für die unterschiedlichen Beobachtungsstationen eines Satellitennavigationssystems oder für Gruppen von Beobachtungsstationen eines Satellitennavigationssystems Fehlerbudgets an Nutzungssysteme übertragen werden, aus denen dann insbesondere von einzelnen Nutzungssystemen ein skalarer Wert berechnet werden kann, der die Genauigkeit der Fehlerabschätzung der Erzeugung des Navigationssignals angibt. Dadurch können die skalaren Werte, welche einzelne Nutzungssysteme verwenden, deutlich kleiner ausfallen, da ein skalarer Wert ortsabhängig von einem Nutzungssystem berechnet werden kann und nicht mehr das Maximum für alle Nutzungssysteme in einer Zentrale des Satellitennavigationssystems ausgerechnet und an die Nutzungssysteme übertragen werden muss. In Galileo wird dieser skalare Wert SISMA genannt. Zudem können durch die Berechnung des skalaren Werts in einem Nutzungssystem auch Kontinuitätsanforderungen einzelner Nutzungssysteme berücksichtigt werden, wodurch nicht mehr die höchsten Anforderungen an Kontinuität bei jedem Nutzungssystem erfüllt werden müssen.

Die Patentanmeldung EP 2 051 093 A1 beschreibt ein Verfahren zur Integritätsüberwachung von Satellitennavigationssignalen, bei dem verschiedene Erkennungsmechanismen für Integritätsprobleme kombiniert eingesetzt werden, um so einerseits verbesserte Integritätsdienste anbieten zu können, und andererseits die Leistungsfähigkeit eines GNSS (Global Navigation Satellite System) verbessern zu können. Als Erkennungsmechanismen sind folgende vorgesehen:
ein erstes Erkennen von Integritätsproblemen, indem an verschiedenen Orten dieselbe Instanz eines Navigationssignals von einem bestimmten Satelliten empfangen wird und die empfangenen Instanzen ausgewertet werden um den Fehlern auf den Signalen und optional den Fehler bei der Fehlerbestimmung abzuschätzen und zu charakterisieren um dann schlussendlich diese Information zusammen mit anderer Information zum Ermitteln des Integritätsrisikos zu verwenden;
ein zweites Erkennen von Integritätsproblemen, indem eine oder mehrere Messungen eines oder mehrerer empfangener Navigationssignale von einem bestimmten Satelliten durchgeführt werden und die mindestens eine Messung ausgewertet wird um den Fehlern auf den Signalen und optional den Fehler bei der Fehlerbestimmung abzuschätzen und zu charakterisieren um dann schlussendlich diese Information zusammen mit anderer Information zum Ermitteln des Integritätsrisikos zu verwenden, wobei dieser Schritt für alle an der Positionslösung beteiligenden Signale durchgeführt wird; und anschließend
ein drittes Erkennen von Integritätsproblemen, indem Messungen von mehreren Navigationssignalen von verschiedenen Satelliten durchgeführt und die Messungen ausgewertet werden zum Ermitteln des Integritätsrisikos, wobei Integritätsprobleme, die bereits beim ersten und zweiten Erkennen erkannt werden können, nur mit der Wahrscheinlichkeit berücksichtigt werden, dass sie beim dritten Erkennen auftreten und beim ersten und zweiten Erkennen nicht entdeckt worden sind.

Aufgabe der vorliegenden Erfindung ist es nun, die Integritätskommunikation in einem Satellitennavigationssystem weiter zu verbessern.

Diese Aufgabe wird durch ein Verfahren zur Verbesserung der Integritätskommunikation in einem Satellitennavigationssystem mit den Merkmalen von Anspruch 1 und eine Vorrichtung zur Verbesserung der Integritätskommunikation in einem Satellitennavigationssystem mit den Merkmalen von Anspruch 6 gelöst. Weitere Ausgestaltungen der Erfindung sind Gegenstand der abhängigen Ansprüche.

Ein wesentlicher Gedanke der vorliegenden Erfindung besteht darin, dass vom Satellitennavigationssystem drei Fehlerbudgets für jeweils unterschiedliche Kategorien von Fehlern bei der Bestimmung der Pseudorange zwischen den Satelliten und den Beobachtungsstationen an Nutzungssysteme übertragen werden, die in einem Nutzungssystem kombiniert werden können, um die Integrität des Satellitennavigationssystems noch genauer ermitteln bzw. bestimmen zu können, als es bisher möglich war. Durch die Übertragung von diesen drei Fehlerbudgets kann daher die Integritätskommunikation und - bestimmung in einem Satellitennavigationssystem und die Integritätsbestimmung in einem Nutzungssystem weiter verbessert werden.

Die Erfindung betrifft nun gemäß einer Ausführungsform ein Verfahren zur Verbesserung der Integritätskommunikation in einem Satellitennavigationssystem, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche in ihrer Gesamtheit die Satelliten und deren Signale überwachen, und mindestens eine Sendestation aufweist, wobei das Verfahren Folgendes umfasst:

Ermitteln von Fehlern, welche bei der Bestimmung der Pseudorange zwischen den Satelliten und den Beobachtungsstationen entstanden sind bzw hätten entstehen können und die Integrität des Satellitennavigationssystems beeinflussen können,

Bilden von drei Fehlerbudgets für jeweils unterschiedliche Kategorien von Fehlern, welche bei der Bestimmung der Pseudorange zwischen den Satelliten und den Beobachtungsstationen entstanden sind bzw. hätten entstehen können, aus den ermittelten Fehlern, welche bei der Bestimmung der Pseudorange zwischen den Satelliten und den Beobachtungsstationen entstanden sind bzw. hätten entstehen können,

Übertragen der drei Fehlerbudgets entweder pro Bodenstation oder für Gruppe von Bodenstation mit einem Navigationssignal mindestens eines Satelliten an Nutzungssysteme, und

Empfangen des Navigationssignals und Abschätzen der Integrität des Satellitennavigationssystems durch Auswerten der im empfangenen Navigationssignal enthaltenen Fehlerbudgets .

Die drei Fehlerbudgets können folgende Fehlerbudgets aufweisen:
ein erstes Fehlerbudget, in dem alle bei Entfernungsabschätzungen zu verschiedenen Satelliten an einer Beobachtungsstation zu einem Zeitpunkt korrelierte Fehlerbeiträge zusammengefasst sind;
ein zweites Fehlerbudget, in dem alle bei Entfernungsabschätzungen zu verschiedenen Satelliten an einer Beobachtungsstation zu einem Zeitpunkt unkorrelierte Fehlerbeiträge zusammengefasst sind;
ein drittes Fehlerbudget für die Fehlerbeiträge, über deren Korreliertheit keine Aussage getroffen werden kann.

Das erste Fehlerbudget kann Fehler bei der Modellierung der trockenen Troposphäre aufweist, insbesondere wenn die Troposphäre großräumig keine starken Gradienten aufweisen.

Das zweite Fehlerbudget kann Fehler aufgrund des feuchten Anteils der Troposphäre und/oder Fehler aufgrund von Mehrwegeausbreitungseffekten der Navigationssignale aufweisen.

Das dritte Fehlerbudget kann Fehler, die durch dem Empfang in den einzelnen Kanälen im Empfänger in der Beobachtungsstation auftreten, aufweisen.

In einer weiteren Ausführungsform betrifft die Erfindung ein Nutzungssystem für ein Satellitennavigationssystem, insbesondere mobiles Navigationsgerät, das zur Benutzung mit einem Verfahren nach der Erfindung und wie vorstehend beschrieben ausgebildet ist.

Das Nutzungssystem kann ferner ausgebildet sein, aus empfangenen Fehlerbudgets die Integrität des Satellitennavigationssystems abzuschätzen und daraus ein Integritätsrisiko zu ermitteln.

Schließlich betrifft die Erfindung in einer Ausführungsform eine Vorrichtung zur Verbesserung der Integritätskommunikation in einem Satellitennavigationssystem, das ein Raumsegment mit mehreren Satelliten, die Navigationssignale zum Empfangen und Auswerten durch Nutzungssysteme für die Positionsbestimmung aussenden, und ein Bodensegment mit mehreren Beobachtungsstationen, welche in ihrer Gesamtheit die Satelliten und deren Signale überwachen, und mindestens eine Sendestation aufweist, wobei die Vorrichtung folgendes aufweist:
Mittel zum Ermitteln von Fehlern, welche bei der Bestimmung der Pseudorange zwischen den Satelliten und den Beobachtungsstationen entstanden sind bzw. hätten entstehen können und die Integrität des Satellitennavigationssystems beeinflussen können,
Mittel zum Bilden von drei Fehlerbudgets für jeweils unterschiedliche Kategorien von Fehlern, welche bei der Bestimmung der Pseudorange zwischen den Satelliten und den Beobachtungsstationen entstanden sind bzw. hätten entstehen können, aus den ermittelten Fehlern, und
Mittel zum Übertragen der drei Fehlerbudgets entweder pro Bodenstation oder für Gruppe von Bodenstation an Satelliten des Satellitennavigationssystems zur Verteilung an Nutzungssysteme.

Die Mittel der Vorrichtung können in Soft- und/oder Hardware implementiert sein. Die Vorrichtung kann zentral in einem Kontrollzentrum des Bodensegments angeordnet oder auf mehrere Komponenten des Bodensegments verteilt sein.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Satellitennavigationssystem mit einem Ausführungsbeispiel einer Vorrichtung zur Verbesserung der Integritätskommunikation in einem Satellitennavigationssystem gemäß der Erfindung; und
- Fig. 2: ein Flussdiagramm eines Ausführungsbeispiels eines Verfahrens zur Verbesserung der Integritätskommunikation in einem Satellitennavigationssystem gemäß der Erfindung.

Im Folgenden können gleiche und/oder funktional gleiche Elemente mit den gleichen Bezugszeichen versehen sein.

Satellitensysteme zur weltweiten Navigation (GNSS; GNSS = Global Navigation Satellite System, kurz Satellitennavigationssystem) werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen (Beobachtungsstationen) umfasst, sowie Nutzungssysteme auf, welche die von den Satelliten per Funk übermittelten Satellitensignale insbesondere zur Navigation auswerten und nutzen.

In einem GNSS erfordert eine genaue Detektion der Position eines Nutzers sowohl lokale als auch globale Integrität. Integrität bedeutet insbesondere, dass einerseits das GNSS imstande ist, einen Nutzer innerhalb einer bestimmten Zeitspanne zu warnen, wenn Teile des GNSS nicht für die Navigation benutzt werden sollen, beispielsweise bei Ausfall von Systemkomponenten, und dass andererseits der Nutzer den Navigationsdaten, die er über Satellitennavigationssignale von den Satelliten des GNSS erhält, vertrauen kann, insbesondere sich auf die Genauigkeit der empfangenen Navigationsdaten verlassen kann.

Beim Integritätskonzept von Galileo ist geplant, jeden Satellit vom erdfesten Empfangseinrichtungs-System zu überwachen und entsprechende Nachrichten-Signale bezüglich des Verhaltens jedes Satelliten an Nutzungssysteme zu übertragen, beispielsweise eine geschätzte Signal-In-Space-Accuracy (SISA) eines Satelliten oder eine einfache Fehleranzeige "Not OK" bei einem fehlerhaften Satelliten. Diese Integritätsinformationen werden mit den Navigationssignalen übertragen.

Galileo soll auch fähig sein, das Signal-In-Space (SIS), also das von den Satelliten ausgesendete Navigationssignal innerhalb des Bodensegments durch Benutzung der Messungen von den einzelnen Galileo-Sensorstationen zu überwachen. Mithilfe der bekannten Positionen der Galileo-Sensorstationen kann dann die aktuelle Position des richtungsabhängigen Phasenzentrums eines Satelliten und damit der maximale Fehler des Satelliten bzw. des von ihm ausgesandten Signals im Raum, der sogenannte Signal-In-Space-Error (SISE) geschätzt werden.

Eine Voraussage der Verteilung des SISE kann durch eine Gaussverteilung mit der kleinsten Standardabweichung dargestellt werden, wobei diese Darstellung ein overbounden einschließen kann. Die Standardabweichung dieser Gausverteilung wird als Signal-In-Space-Accuracy (SISA) bezeichnet. Mit der SISA kann die Differenz zwischen der aktuellen 4-dimensionalen Position (Orbit und Uhrzeit) eines Satelliten und der vorausgesagten 4-dimensionalen Position, die in einer Navigationsnachricht enthalten ist, beschrieben werden.

Die Schätzung des SISE ist allerdings ein fehlerträchtiger Prozess. Daher wird in der Regel angenommen, dass die Verteilung des aktuellen SISE um den Wert des geschätzten SISE mit einer Gaussverteilung mit der Standardabweichung beschrieben werden kann, die als Signal-In-Space-Monitoring-Accuracy (SISMA) bezeichnet wird. SISMA ist also die Genauigkeit der Schätzung des SISE für einen Satelliten.

Beim bisherigen Konzept von Galileo für die Übertragung von SISMA wird für jeden Satelliten ein skalarer Wert übertragen, der für jede mögliche Position eines Nutzungssystems (Benutzerposition) konservativ ist. Dadurch wird jedoch viel von der Leistungsfähigkeit des GNSS verschenkt, da an vielen Positionen ein deutlich zu großer Wert übertragen wird, was zu einer aufwendigen Integritätskommunikation im GNSS führt.

Da die einzelnen Beobachtungsstationen beziehungsweise die Kommunikation zwischen der einzelnen Bodenstation und der zentralen Prozessierungsstelle eine relativ hohe Ausfallwahrscheinlichkeit aufweisen, ist es zudem nochmals notwendig, mögliche Ausfälle von Bodenstationen schon im Voraus bei der Berechnung des skalaren Werts zu berücksichtigen, wobei so viele Ausfälle berücksichtigt werden müssen, dass auch die strengsten Kontinuitätsanforderungen erfüllt werden können. Diese Berücksichtigung führt jedoch wieder zu einem deutlich zu großen Wert für den skalaren Wert, insbesondere für Nutzungssysteme, die keine so hohen Anforderungen an die Kontinuität haben. Zudem wird zur Berechnung des skalaren Werts für jeden Satelliten die schlechteste Beobachtungsstation ausfallen gelassen, was deutlich konservativer ist als häufig erforderlich.

Bisher wurde zudem nicht berücksichtigt, dass sich bei der Abschätzung der Schätzfehler korrelierte Fehler zwischen Messungen anders als unkorrelierte Fehler auswirken. Die Integritätskommunikation kann jedoch wesentlich verbessert werden, wenn die unterschiedlichen Auswirkungen von Fehler unterschiedlicher Kategorien an Nutzungssysteme übertragen werden, wie es die vorliegende Erfindung vorschlägt.

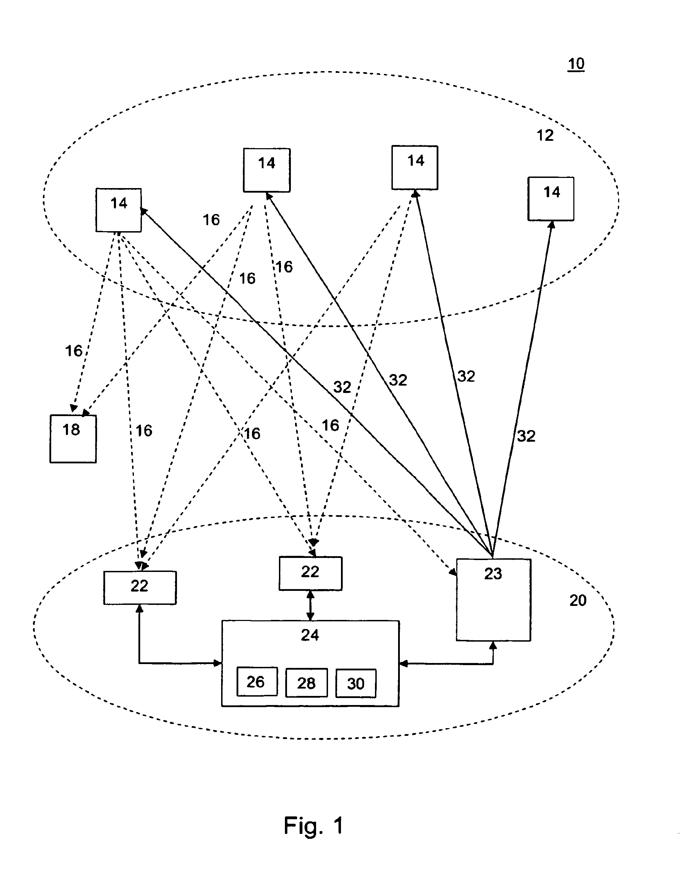

In Fig. 1 ist zur Veranschaulichung der Integritätskommunikation ein Beispiel eines Satellitennavigationssystems 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Navigationssignale 16 aus, die von Nutzungssystemen 18 wie beispielsweise mobilen Navigationsgeräten sowie von Beobachtungsstationen 22 des Bodensegments 20 empfangen werden können. Die Beobachtungsstationen 22 sind insbesondere zur Überwachung der Satelliten 14 und Koordination von der Integritätskommunikation im Satellitennavigationssystem 10 vorgesehen. Hierzu werten sie die empfangenen Navigationssignale 16 aus bzw. führen Messungen durch, indem sie die mit jedem Navigationssignal 16 übertragenen Daten eines Satelliten 14, insbesondere Orbit und Zeitpunkt der Signalerzeugung sowie Signalstruktur überprüfen. Eine Sendestation 23 kann auch Steuernachrichten 32 an Satelliten senden, beispielsweise um eine Korrektur von Satellitendaten zu bewirken oder um die Integritätskommunikation im Satellitennavigationssystem 10 zu beeinflussen, wie im Folgenden noch genauer beschrieben wird. Sowohl die Beobachtungsstationen 22 als auch die Sendestationen 23 sind kommunikationsmäßig mit einer zentralen Vorrichtung 24 zur Verbesserung der Integritätskommunikation im Satellitennavigationssystem 10 gekoppelt.

Die Vorrichtung 24 weist Ermittlungsmittel 26 für die Integrität des Satellitennavigationssystems beeinflussende Fehler, Fehlerbudgetbildungsmittel 28 und Fehlerbudgetübertragungsmittel 28 auf.

Die Ermittlungsmittel 26 ermitteln alle Fehler, welche bei der Bestimmung der Pseudorange zwischen den Satelliten und den Beobachtungsstationen entstanden sind bzw. hätten entstehen können und welche die Integrität des Satellitennavigationssystems beeinflussen können. Dazu gehören insbesondere die folgenden Fehler:
- Fehler bei der Modellierung der trockenen Troposphäre, insbesondere wenn die Troposphäre großräumig keine starken Gradienten aufweist
- Fehler aufgrund des feuchten Anteils der Troposphäre
- Fehler aufgrund von Mehrwegeausbreitungseffekten der Navigationssignale
- Uhrensynchronisationsfehler der Beobachtungsstationen
- Fehler bei der Orbit- und Uhrschätzung

Die Fehlerbudgetbildungsmittel 28 bilden aus den ermittelten Fehlern drei unterschiedliche Kategorien von Fehlern (Fehlerbudgets) wie folgt:
- ein erstes Fehlerbudget, in dem alle bei Entfernungsabschätzungen zu verschiedenen Satelliten an einer Bodenstation zu einem Zeitpunkt korrelierte Fehlerbeiträge zusammengefasst sind; in diese Kategorie fallen beispielsweise die Fehler bei der Modellierung der trockenen Troposphäre und die Uhrensynchronisationsfehler der Beobachtungsstationen;
- ein zweites Fehlerbudget, in dem alle bei Entfernungsabschätzungen zu verschiedenen Satelliten an einer Bodenstation zu einem Zeitpunkt unkorrelierte Fehlerbeiträge zusammengefasst sind; in diese Kategorie fallen beispielsweise die Fehler aufgrund des feuchten Anteils der Troposphäre und die Fehler aufgrund von Mehrwegeausbreitungseffekten der Navigationssignale;
- ein drittes Fehlerbudget für die Fehlerbeiträge, über deren Korreliertheit keine Aussage getroffen werden kann; in diese Kategorie fallen beispielsweise regelmäßig die Fehler, die durch dem Empfang in den einzelnen Kanälen im Empfänger in der Beobachtungsstation auftreten.

Die so gebildeten Fehlerbudgets werden dann von den Fehlerbudgetübertragungsmitteln 28 der Vorrichtung 24 an Sendestationen 23 übermittelt, die die Fehlerbudgets an die Satelliten 14 beispielsweise mit einer Steuernachricht 32 übertragen und sie so mit den Navigationssignalen 16 der Satelliten 14 an Nutzungssysteme 18 verteilen. Durch die Unterscheidung von Fehlern mittels der drei Fehlerbudgets kann die Integritätskommunikation im Satellitennavigationssystem 10 verbessert werden, da es den Nutzungssystemen 18 dadurch ermöglicht wird, genauer zwischen die Integrität des Satellitennavigationssystem beeinträchtigenden Beobachtungsfehlern an den Beobachtungsstationen und bei der Berechung der Beobachtungsgenauigkeit durch die Vorrichtung zur Verbesserung der Integritätskommunikation (24) und hier insbesondere im Ermittlungsmittel für die Integrität des Satellitennavigationssystems beeinflussende Fehler zu unterscheiden und daher die Integrität eines empfangenen Satellitennavigationssignals besser einzuschätzen. Jedes Nutzungssystem 18, das ein Satellitennavigationssignal 16 mit den drei Fehlerbudgets empfängt, kann vor allem anhand der Fehlerbudgets die Leistungsfähigkeit des Satellitennavigationssystems zum einen bezüglich der Genauigkeit des Navigationssignal (SISA) und zum anderen bezüglich der Genauigkeit der Fehlerabschätzung der Navigationssignale (SISMA) durch das Bodensegment, also die Integrität abschätzen, wobei die Verbesserung nur für die Abschätzung des letztern von Bedeutung ist.

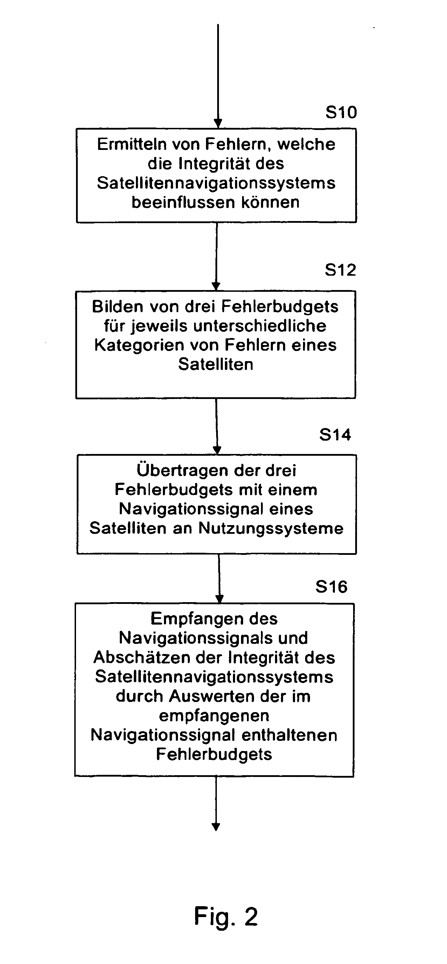

In Figur 2 ist kurz der Ablauf eines Verfahrens zur Verbesserung der Integritätskommunikationen im Satellitennavigationssystem 10 gemäß der Erfindung skizziert. In einem ersten Schritt S10 werden die Fehler ermittelt, welche die Integrität des Satellitennavigationssystems beeinflussen können. Anschließend werden im Schritt S12 drei Fehlerbudgets für jeweils unterschiedliche Kategorien von Fehlern aus den ermittelten Fehlern gebildet. Im darauffolgenden Schritt S14 werden die drei Fehlerbudgets zunächst an die Satelliten übertragen, die es wiederum mit ihren Navigationssignalen an das Bodensegment zurück übertragen, zur Auswertung durch Nutzungssysteme. Im Schritt S16 wird ein Navigationssignal eines Satelliten von einem Nutzungssystem empfangen und die darin enthaltenen Fehlerbudgets werden vom Nutzungssystem ausgewertet, um die Integrität des Satellitennavigationssystems abzuschätzen. Bei dem letzten Schritt kann das Nutzungssystem insbesondere die Fehler des dritten Fehlerbudgets entweder dem ersten oder dem zweiten Fehlerbudget zuschlagen, je nachdem, welches der beiden Fehlerbudgets eine konservativere Abschätzung der Leistungsfähigkeit und insbesondere Integrität des Satellitennavigationssystems ergibt.

Aufgrund der vorliegenden Erfindung können insbesondere die skalaren Werte für die Genauigkeit der Fehlerschätzung (SISMA), die einzelne Nutzungssysteme zur Integritätsüberprüfung verwenden, kleiner werden, ohne dass mehr Hardware installiert werden muss, da die Modellierung genauer erfolgen kann.

### Bezugszeichen

- 10: Satellitennavigationssystem
- 12: Raumsegment
- 14: Satelliten
- 16: Navigationssignale
- 18: Nutzungssysteme
- 20: Bodensegment
- 22: Beobachtungsstationen
- 23: Sendestationen
- 24: Vorrichtung zur Verbesserung der Integritätskommunikation in einem Satellitennavigationssystem
- 26: Ermittlungsmittel für die Integrität des Satellitennavigationssystems beeinflussende Fehler
- 28: Fehlerbudgetbildungsmittel
- 30: Fehlerbudgetübertragungsmittel
- 32: Steuernachricht einer Sendestation 23
- S10-S16: Verfahrensschritte

## Patentansprüche

1. Verfahren zur Verbesserung der Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (23, welche in ihrer Gesamtheit die Satelliten (14) und deren Signale überwachen, und mindestens eine Sendestation aufweist, wobei das Verfahren Folgendes aufweist:
- Ermitteln von Fehlern, welche bei der Bestimmung der Pseudorange zwischen den Satelliten und den Beobachtungsstationen entstanden sind bzw. hätten entstehen können und die Integrität des Satellitennavigationssystems (10) beeinflussen können (S10),
- Bilden von drei Fehlerbudgets für jeweils unterschiedliche Kategorien von Fehlern , welche bei der Bestimmung der Pseudorange zwischen den Satelliten und den Beobachtungsstationen entstanden sind bzw. hätten entstehen können, aus den ermittelten Fehlern (S12),
- Übertragen der drei Fehlerbudgets entweder pro Bodenstation oder für Gruppe von Bodenstation mit einem Navigationssignal mindestens eines Satelliten an Nutzungssysteme (S14), und
- Empfangen des Navigationssignals und Abschätzen der Integrität des Satellitennavigationssystems (10) durch Auswerten der im empfangenen Navigationssignal enthaltenen Fehlerbudgets (S16) wobei die drei gebildeten Fehlerbudgets folgendes aufweisen:
ein erstes Fehlerbudget, in dem alle bei der Entfernungsabschätzungen zu verschiedenen Satelliten an einer Beobachtungsstation zu einem Zeitpunkt korrelierte Fehlerbeiträge zusammengefasst sind;
ein zweites Fehlerbudget, in dem alle bei Entfernungsabschätzungen zu verschiedenen Satelliten an einer Beobachtungsstation zu einem Zeitpunkt unkorrelierte Fehlerbeiträge zusammengefasst sind;
ein drittes Fehlerbudget für die Fehlerbeiträge, über deren Korreliertheit keine Aussage getroffen werden kann.

2. Verfahren nach Anspruch 1,
**dadurch gekennzeichnet, dass**
das erste Fehlerbudget Fehler bei der Modellierung der trockenen Troposphäre aufweist, insbesondere wenn die Troposphäre großräumig keine starken Gradienten aufweist.

3. Verfahren nach Anspruch 1 oder 2,
**dadurch gekennzeichnet, dass**
das zweite Fehlerbudget Fehler aufgrund des feuchten Anteils der Troposphäre und/oder Fehler aufgrund von Mehrwegeausbreitungseffekten der Navigationssignale aufweist.

4. Verfahren nach Anspruch 1, 2 oder 3,
**dadurch gekennzeichnet, dass**
das dritte Fehlerbudget Fehler, die durch den Empfang in den einzelnen Kanälen im Empfänger in der Beobachtungsstation auftreten, aufweist.

5. Nutzungssystem (18) für ein Satellitennavigationssystem, insbesondere mobiles Navigationsgerät, das zur Benutzung mit einem Verfahren nach einem der vorhergehenden Ansprüche ausgebildet ist, indem es aus den drei mit dem Verfahren nach einem der vorhergehenden Ansprüche gebildeten und mit einem Navigationssignal empfangenen Fehlerbudgets die Integrität des Satellitennavigationssystems (10) abschätzt und daraus ein Integritätsrisiko ermittelt.

6. Vorrichtung (24) zur Verbesserung der Integritätskommunikation in einem Satellitennavigationssystem (10), das ein Raumsegment (12) mit mehreren Satelliten (14), die Navigationssignale (16) zum Empfangen und Auswerten durch Nutzungssysteme (18) für die Positionsbestimmung aussenden, und ein Bodensegment (20) mit mehreren Beobachtungsstationen (22), welche in ihrer Gesamtheit die Satelliten (14) und deren Signale überwachen, und mindestens eine Sendestation (23) aufweist, wobei die Vorrichtung folgendes aufweist:
- Mittel (26) zum Ermitteln von Fehlern, welche bei der Bestimmung der Pseudorange zwischen den Satelliten und den Beobachtungsstationen entstanden sind bzw. hätten entstehen können und die Integrität des Satellitennavigationssystems (10) beeinflussen können,
- Mittel (28) zum Bilden von drei Fehlerbudgets für jeweils unterschiedliche Kategorien von Fehlern, welche bei der Bestimmung der Pseudorange zwischen den Satelliten und den Beobachtungsstationen entstanden sind bzw. hätten entstehen können, aus den ermittelten Fehlern, wobei die drei gebildeten Fehlerbudgets aufweisen
ein erstes Fehlerbudget, in dem alle bei der Entfernungsabschätzungen zu verschiedenen Satelliten an einer Beobachtungsstation zu einem Zeitpunkt korrelierte Fehlerbeiträge zusammengefasst sind,
ein zweites Fehlerbudget, in dem alle bei Entfernungsabschätzungen zu verschiedenen Satelliten an einer Beobachtungsstation zu einem Zeitpunkt unkorrelierte Fehlerbeiträge zusammengefasst sind, und
ein drittes Fehlerbudget für die Fehlerbeiträge, über deren Korreliertheit keine Aussage getroffen werden kann, und
- Mittel (30) zum Übertragen der drei Fehlerbudgets entweder pro Bodenstation oder für Gruppe von Bodenstation an Satelliten (14) des Satellitennavigationssystems (10) zur Verteilung an Nutzungssysteme (18).

## Claims

1. Method for improving the integrity communication in a satellite navigation system (10) which has a space segment (12) comprising a number of satellites (14) which emit navigation signals (16) for the reception and evaluation by utilization systems (18) for position finding, and a ground segment (20) comprising a number of observation stations (23) which, as a whole, monitor the satellites (14) and their signals, and has at least one transmitting station, the method having the following:
- determining errors which have arisen or could have arisen during the determination of the pseudorange between the satellites and the observation stations and could influence the integrity of the satellite navigation system (10) (S10),
- forming three error budgets for in each case different categories of error which have arisen or could have arisen during the determination of the pseudorange between the satellites and the observation stations, from the errors determined (S12),
- transmitting the three error budgets either per ground station or for a group of ground stations with a navigation signal of at least one satellite to utilization systems (S14), and
- receiving the navigation signal and estimating the integrity of the satellite navigation system (10) by evaluating the error budgets contained in the received navigation signal (S16), wherein the three error budgets formed have the following:
a first error budget in which all error contributions correlated at one time during the range estimations from different satellites at one observation station are combined,
a second error budget in which all error contributions uncorrelated at one time during range estimations from different satellites at one observation station are combined;
a third error budget for the error contributions, about the state of correlation of which no statement can be made.

2. Method according to Claim 1, **characterized in that** the first error budget has errors in the modelling of the dry troposphere, particularly when the troposphere has no strong gradients over a wide area.

3. Method according to Claim 1 or 2, **characterized in that** the second error budget has errors due to the moist component of the troposphere and/or errors due to multi-path propagation effects of the navigation signals.

4. Method according to Claim 1, 2 or 3, **characterized in that** the third error budget has errors which occur due to the reception in the individual channels in the receiver in the observation station.

5. Utilization system (18) for a satellite navigation system, especially a mobile navigation device which is constructed for use with a method according to one of the preceding claims, in that it estimates from the three error budgets formed by means of the method according to one of the preceding claims and received by means of a navigation signal the integrity of the satellite navigation system (10) and determines from this an integrity risk.

6. Device (24) for improving the integrity communication in a satellite navigation system (10) which has a space segment (12) comprising a number of satellites (14) which emit navigation signals (16) for the reception and evaluation by utilization systems (18) for position finding, and a ground segment (20) comprising a number of observation stations (22) which, as a whole, monitor the satellites (14) and their signals, and has at least one transmitting station (23), the device having the following:
- means (26) for determining errors which have arisen or could have arisen during the determination of the pseudorange between the satellites and the observation stations and could influence the integrity of the satellite navigation system (10),
- means (28) for forming three error budgets for in each case different categories of errors which have arisen or could have arisen during the determination of the pseudorange between the satellites and the observation stations, from the errors determined wherein the three error budgets formed have a first error budget in which all error contributions correlated at one time during the range estimations from different satellites at one observation station are combined,
a second error budget in which all error contributions uncorrelated at one time during range estimations from different satellites at one observation station are combined, and
a third error budget for the error contributions, about the state of correlation of which no statement can be made, and
- means (30) for transmitting the three error budgets either per ground station or for a group of ground stations to satellites (14) of the satellite navigation system (10) for distribution to utilization systems (18).

## Revendications

1. Procédé destiné à améliorer la communication d'intégrité dans un système de navigation par satellite (10) qui comprend un segment spatial (12) comportant plusieurs satellites (14) émettant des signaux de navigation (16) destinés à être reçus et évalués par des systèmes d'utilisation (18) pour la détermination de position, et un segment sol (20) comportant plusieurs stations d'observation (23) qui surveillent la totalité des satellites (14) et leurs signaux, et au moins une station d'émission, le procédé comprenant les étapes suivantes :
- détection d'erreurs qui se sont produites ou qui auraient pu se produire lors de la détermination de la pseudo-distance entre les satellites et les stations d'observation et qui peuvent influencer l'intégrité du système (10) de navigation par satellite (S10),
- établissement de trois bilans d'erreurs pour différentes catégories respectives d'erreurs qui se sont produites ou auraient pu se produire lors de la détermination de la pseudo-distance entre les satellites et les stations d'observation à partir des erreurs détectées (S12),
- transmission à des systèmes d'utilisation des trois bilans d'erreurs soit pour chaque station sol, soit pour un groupe de stations sol au moyen d'un signal de navigation d'au moins un satellite (S14), et
- réception du signal de navigation et estimation de l'intégrité du système de navigation par satellite (10) par évaluation des bilans d'erreurs (S16) contenus dans les signaux de navigation reçus, dans lequel les trois bilans d'erreurs établis comprennent :
un premier bilan d'erreur dans lequel sont rassemblées toutes les contributions d'erreurs corrélées à un instant lors des estimations de distance entre une station d'observation et différents satellites ;
un deuxième bilan d'erreur dans lequel sont rassemblées toutes les contributions d'erreurs non corrélées à un instant lors des estimations de distance entre une station d'observation et différents satellites ;
un troisième bilan d'erreur pour les contributions d'erreurs corrélées pour lesquelles il n'est pas possible d'établir une corrélation.

2. Procédé selon la revendication 1, **caractérisé en ce que** le premier bilan d'erreur comprend des erreurs liées à la modélisation de la troposphère sèche, en particulier lorsque la troposphère ne présente pas de forts gradients à grande échelle.

3. Procédé selon la revendication 1 ou 2, **caractérisé en ce que** le deuxième bilan d'erreur comprend des erreurs liées à la partie humide de la troposphère et/ou des erreurs liées aux effets de propagation par trajets multiples des signaux de navigation.

4. Procédé selon la revendication 1, 2 ou 3, **caractérisé en ce que** le troisième bilan d'erreur comprend des erreurs qui se produisent lors de la réception dans les canaux individuels du récepteur de la station d'observation.

5. Système d'utilisation (18) pour système de navigation par satellite, notamment pour appareil de navigation mobile, qui est conçu pour être utilisé avec un procédé selon l'une quelconque des revendications précédentes, **caractérisé en ce qu'**il estime à partir des trois bilans d'erreurs établis au moyen du procédé selon l'une quelconque des revendications précédentes et reçus par l'intermédiaire d'un signal de navigation, l'intégrité du système de navigation par satellite (10) et en déduit un risque pour l'intégrité.

6. Dispositif (24) destiné à améliorer la communication d'intégrité dans un système de navigation par satellite (10) qui comprend un segment spatial (12) comportant plusieurs satellites (14) émettant des signaux de navigation (16) destinés à être reçus et évalués par des systèmes d'utilisation (18) pour la détermination de position, et un segment sol (20) comportant plusieurs stations d'observation (22) qui surveillent la totalité des satellites (14) et leurs signaux, et au moins une station d'émission (23), dans lequel le dispositif comprend :
- des moyens (26) destinés à déterminer des erreurs qui se sont produites ou auraient pu se produire lors de la détermination de la pseudo-distance entre les satellites et les stations d'observation et qui peuvent influencer l'intégrité du système de navigation par satellite (10),
- des moyens (28) destinés à établir trois bilans d'erreurs pour différentes catégories respectives d'erreurs qui se sont produites ou auraient pu se produire lors de la détermination de la pseudo-distance entre les satellites et les stations d'observation à partir des erreurs détectées, dans lequel les trois bilans d'erreurs comprennent :
un premier bilan d'erreur dans lequel sont rassemblées toutes les contributions d'erreurs corrélées à un instant lors des estimations de distance entre une station d'observation et différents satellites,
un deuxième bilan d'erreur dans lequel sont rassemblées toutes les contributions d'erreurs non corrélées à un instant lors des estimations de distance entre une station d'observation et différents satellites, et
un troisième bilan d'erreurs pour les contributions d'erreurs corrélées pour lesquelles il n'est pas possible d'établir une corrélation, et
- des moyens (30) destinés à transmettre les trois bilans d'erreurs soit pour chaque station sol, soit pour un groupe de stations sol à des satellites (14) du système de navigation par satellite (10) pour leur distribution à des systèmes d'utilisation (18).
